# EUROPEAN PATENT APPLICATION

(11) **EP 3 170 995 A1**
(43) Date of publication of application: **24.05.2017**
(21) Application number: 15195839.4
(22) Date of filing: 23.11.2015
(51) Int. Cl.: F01K 7/22, F01K 23/10

(54) **COMBINED CYCLE POWER PLANT AND RELATED METHOD OF OPERATION**

(71) Applicant: Siemens Aktiengesellschaft, 80333 München (DE)
(72) Inventor: Jonshagen, Klas, 605 80 Svärtinge (SE)

(57) **Abstract**

The invention is related to a combined cycle power plant (100) and a corresponding method of operation, the combined cycle power plant (100) comprising a gas turbine engine, a steam turbine engine (3), a heat exchanger (2) via which an exhaust fluid from the gas turbine engine (1) can heat up a steam cycle fluid, an exhaust fluid recirculation line (10) which is able to guide a fraction of the exhaust fluid to an inlet (11) of the gas turbine engine (1), and a control unit (20). The control unit (20) is adapted to monitor and/or configure an operating point, particularly a load, of the gas turbine engine (1) or of the combined cycle power plant (100) and to open the exhaust fluid recirculation line (10) to guide a fraction of the exhaust fluid to the inlet (11) of the gas turbine engine (1) in response to that the operating point indicates a part load operation of the gas turbine engine (1).

## Description

### FIELD OF THE INVENTION

The invention relates to a combined cycle power plant which allows improved efficiency at part load operation. The invention is further related to a method of operating such a combined cycle power plant.

### BACKGROUND OF THE INVENTION

A combined cycle comprises an assembly of thermodynamic heat engines - in the following a gas turbine engine and one or more steam turbine engines - that work in tandem. The gas turbine engine drives a shaft, e.g. to drive a generator for electrical power generation, and also generates exhaust heat. The working fluid of the gas turbine engine is still low enough in its entropy that energy may be extracted from the exhaust heat of the working fluid of the gas turbine engine for the steam turbine engine operation. The steam turbine engine(s) will also drive shaft(s) via which further generator(s) can be driven for power generation.

The gas turbine engine is operated by the so called Brayton cycle and is burning fuel, whose hot exhaust powers a steam power plant operating by the so called Rankine cycle. The Rankine cycle is typically a closed loop, so the working fluid of the Rankine cycle is reused over and over again. The working fluid of the Brayton cycle is typically used in an open system, so that ambient air is taken and compressed, mixed and burned with fuel leading to a combusted fluid driving the turbine of the gas turbine engine, wherein the combusted fluid is eventually exhausted into the ambient. Combining these two thermodynamic cycles results in improved overall efficiency of the combined cycle power plant.

Gas turbine engines like other rotating machines or turbomachines are required to operate at a range of modes of operation. Particularly there may be the need to operate a gas turbine engine on a broad range of loads. Additionally there may be the need to operate a gas turbine engine on different levels of ambient temperature. Furthermore there may be requirements to fulfill emission demands for all different modes of operation.

At part load operation, the load of a combined cycle power plant can be controlled to maintain the turbine inlet temperature of the gas turbine engine - i.e. the temperature downstream of the combustor and at an upstream end of a turbine section of the gas turbine engine - as high as possible without exceeding temperature limits of the gas turbine exhaust. High part load firing temperature will give high cycle efficiency and low emissions.

A compressor of the gas turbine engine may be equipped with turnable so called variable guide vanes. At part load, fuel supply may be reduced. To control the turbine inlet temperature while the load is reduced by decreasing the fuel flow an angle of compressor variable guide vanes may be altered. This allows controlling the turbine inlet temperature while the load is reduced. Efficiency may suffer, though, inefficient flow angles at first stages of the compressor may arise.

It is an aim to provide a solution to extend the range of modes of operations in which emission requirements are sufficiently fulfilled and in which efficiency is optimised.

### SUMMARY OF THE INVENTION

The present invention seeks to provide a solution to extend the range of modes of operations of a gas turbine.

This objective is achieved by the independent claims. The dependent claims describe advantageous developments and modifications of the invention.

In accordance with the invention there is provided a combined cycle power plant comprising a gas turbine engine, a steam turbine engine, a heat exchanger via which an exhaust fluid from the gas turbine engine can heat up a steam cycle fluid, and an exhaust fluid recirculation line which is able to guide a fraction of the exhaust fluid to an inlet of the gas turbine engine. Furthermore a control unit is provided which is adapted to monitor and/or configure an operating point, particularly a load, of the gas turbine engine or of the combined cycle power plant and to open the exhaust fluid recirculation line to guide a fraction of the exhaust fluid to the inlet of the gas turbine engine in response to that the operating point indicates a part load operation of the gas turbine engine.

The "load" may be represented by the power output of the gas turbine engine or the combined power output of both the gas turbine engine and the steam turbine engine. Other parameters can also be monitored that are in direct relation with the load, e.g. the torque of a driven shaft or temperature information of the exhaust gas.

The invention allows, at part load, to maintain a turbine inlet temperature at an upstream end of a turbine section of the gas turbine engine as high as possible without exceeding temperature limits, e.g. of the gas turbine exhaust. High part load firing temperature may give high cycle efficiency and low emissions.

The gas turbine engine may be operated on fixed speed.

To deliver exhaust gas back to the inlet of the gas turbine engine allows heating the otherwise substantially cool - typically ambient temperature - inlet air or fluid. In consequence, particularly when the gas turbine engine is operated on fixed speed, the mass flow through a compressor of the gas turbine engine will be reduced. The volume flow typically stays unchanged.

Furthermore, to deliver exhaust gas - as a combusted product with - back to the inlet of the gas turbine engine results in that less oxygen is available for the combustion process. Particularly for part load operation, which is the focus of the invention, this has no negative effect as in part load operation also the fuel supply may be reduced.

One aspect of the invention is that the exhaust fluid recirculation line is configured to guide just a fraction - less than 100% - of the exhaust fluid back to the inlet of the gas turbine engine. This is considered to create a so called semi closed cycle.

According to the invention the turbine inlet temperature can be controlled to keep constant or to stay within a preferred range of temperatures.

It is possible to keep the turbine inlet temperature as a maximum level. The maximum may be defined by physical properties of the components that are affected by the hot exhaust fluid.

"Part load" operation defines loads greater than 0% and below 100% load, not including 100% load. The lower limit, in which steady and stable operation is possible, will be specific to the specific plant. The invention for example addresses part load ranges starting from 20%, 30%, 40% or other values. The upper limit should not include full load operation, so one may define part load as loads below 100%, but if slight load changes in full load operation changes will be considered to still fall under full load, then possibly the upper limit for part load operation could be set to any value between 98% to 95% to clearly distinguish part load from full load.

According to an embodiment the exhaust fluid recirculation line may be connected at an upstream end of the exhaust fluid recirculation line to an exhaust of the gas turbine engine downstream of the heat exchange. Alternatively it may be connected upstream of the heat exchanger. As a further alternative the exhaust fluid recirculation line may be connected to a tap at the heat exchanger to extract the exhaust fluid from an intermediate position of the heat exchanger.

As previously said, the combined cycle power plant is designed that not the complete exhaust fluid is provided into the exhaust fluid recirculation line. The other part of the exhaust fluid will be provided to further components or exhausted into the ambient.

In a further embodiment the control unit may be adapted to guide through the exhaust fluid recirculation line between 0 and 80% of the exhaust fluid, preferably between 0% and 60%, even more preferably between 0% and 40%.

The 0% value is for operation at full load or operation close to full load. That means that in an embodiment the control unit may be adapted to completely close the exhaust fluid recirculation line in response to that the operating point indicates a full load operation of the gas turbine engine.

Opening and closing of the throughflow through the exhaust fluid recirculation line may be performed via a valve or a similar component.

As already indicated, in an embodiment the control unit may be adapted to reduce fuel supply to the gas turbine engine for an operating point indicating part load operation of the gas turbine engine.

In an embodiment the gas turbine engine may comprise a gas turbine compressor including variable guide vanes. This allows changing the angle of attack of the vanes of the initial stage(s) of the compressor. The control unit may be adapted to change an angle setting of the variable guide vanes to reduce flow - mass flow - through the gas turbine engine in response to that the operating point indicates the part load operation of the gas turbine engine.

According to an embodiment the control unit may be adapted to monitor a turbine inlet temperature of a turbine stage of the gas turbine engine and/or an exhaust temperature of the gas turbine engine taken at an exhaust of the gas turbine engine or at any position past the combustor of the gas turbine engine. Additionally the control unit may be adapted to control an amount of fluid through the recirculation line to keep the turbine inlet temperature and/or the exhaust temperature of the gas turbine engine substantially constant - for example with a deviation of +/- 1% - during part load operation of the gas turbine engine.

In an embodiment the gas turbine engine may be operated by the control unit with fixed revolving speed in both full and part load operation.

As already mentioned the exhaust fluid recirculation line may be arranged such that it can inject delivered recirculated exhaust fluid into the inlet of the gas turbine engine. The fluids will mix at the inlet before they pass to the gas turbine compressor.

In this respect it may be worth noticing that the mixed fluids show an overall increased temperature so that the mixture carries per se less oxygen and has a lesser mass flow.

Alternatively a further heat exchanger could be provided at a downstream end of the exhaust fluid recirculation line and at the inlet of the gas turbine engine, wherein the further heat exchanger is configured to heat up inlet fluid to be provided to the gas turbine engine via heat exchange from delivered recirculated exhaust fluid. In this configuration the fluids will not mix but stay separate. In this configuration the oxygen composition of the air provided via the compressor to the combustor is not affected.

Note that the main working fluid for the gas turbine engine is typically ambient air - and according to the invention possibly mixed with exhaust during part load operation - that is provided from a gas turbine inlet to the compressor and further via a transition piece to the combustor.

The invention may also be related to a control method to control the throughflow through the recirculation line in response of part load operation.

The invention is primarily not directed to a startup procedure. The invention is mainly directed to normal steady mode of operation but would also work for transient operation. Even though the invention is aimed for steady or continuous operation, it allows operation at lower loads - part load - of the gas turbine engine, e.g. above 20% and below 100% of full load.

The invention is also directed to the use of a combined cycle power plant as defined above to improve efficiency in non-transient low load conditions.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:

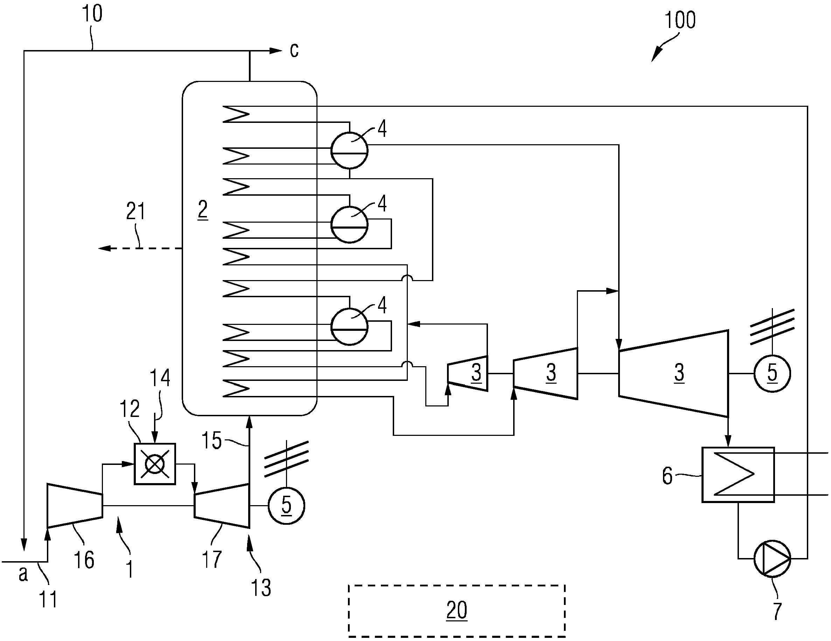

- FIG. 1:: shows schematically a combined cycle power plant with an exhaust fluid recirculation line.

The illustration in the drawing is schematical. It is noted that for similar or identical elements the same reference signs will be used.

Some of the features and especially the advantages will be explained for an assembled and operating gas turbine, but obviously the features can be applied also to the single components of the gas turbine or even other turbo machines but may show the advantages only once assembled and during operation. But when explained by means of a gas turbine during operation none of the details should be limited to a gas turbine while in operation.

### DETAILED DESCRIPTION OF THE INVENTION

To explain briefly the way of operating a gas turbine engine, a gas turbine - short for gas-turbine engine - comprises an air inlet at one axial end followed by a compressor in which incoming air is compressed for application to one or more combustors, which may be annular, so-called can-annular or silo type, the can-annular type being distributed circumferentially around a turbine axis. Fuel is introduced into the combustors and therein mixed with a major part of the compressed air taken from the compressor. Hot gases with high velocity as a consequence of combustion in the combustors are directed to a set of turbine blades within a turbine section, being guided (i.e. redirected) by a set of guide vanes. The turbine blades and a shaft - the turbine blades being fixed to that shaft - form a part of the rotor and are rotated about the axis as a result of the impact of the flow of the hot gases. That rotating rotor (or another connected rotor) also rotates blades of the compressor, so that the compressed air supply to the combustors is generated by the rotor blades of the compressor (i.e. by the used rotating blades interacting with static vanes) once in operation. There may be more than one rotor and/or more than one rotor shaft in the gas turbine engine. Past the turbine section, at a second axial end of the gas turbine and downstream of the turbine section, the combusted gas will be guided to an exhaust of the gas turbine via which it will be released in to the ambient air or guided to a further component, like a steam boiler or a steam turbine. The exhausted gas may contain also combustion emissions, like CO.

It has to be noted that as a general aim typically in gas turbine design it is aimed for lean combustion at full load with supply of as little fuel as possible, particularly to reduce the expenditure for fuel. The lean combustion may typically be configured and optimised for full load operation.

It may be problematic to run the gas turbine engine in continuous low load operation as low load operation is typically far from optimal design conditions. For transient low load operation it may not be a problem to exceed emission legislation for a short time, but for continuous low load operation given emission requirements should be met.

In the following we will identify the ambient air - which may also be mixed with exhaust fluid from the gas turbine engine - that is guided from the air inlet of the gas turbine via the gas turbine compressor and to the combustor as "fluid" or "main fluid", guided through the mentioned components via a main fluid path 13, which is an annular path via which the main fluid is delivered and in which the physical properties of the main fluid will be changed.

Note that in the following a location of one component in relation to a second one is made in respect of a flow direction of a fluid, usually the main fluid. The term "upstream" defines a position that the fluid passes earlier than the "downstream" position. That means an upstream end of a compressor is the section at which air enters the compressor from the inlet of the gas turbine. A downstream end defines the position at which the air is discharged from the component.

Referring now to FIG 1 an abstract schematical drawing of a combined cycle power plant 100 is shown. In the figure a gas turbine engine 1 and a steam turbine engine 3 is shown.

The gas turbine engine 1 comprises an inlet 11, a compressor section 16, a combustor 12 and a turbine section 17. A fuel supply 14 is indicated by an arrow. An exhaust of the gas turbine engine 1 is not particularly shown but indicated via arrow 13. A fluid which is exhausted by the exhaust 13 is identified as exhaust fluid 15.

The exhaust fluid 15 is provided to a heat exchanger 2, particularly a Heat Recovery Steam Generator (HRSG).

The steam turbine engine 3 comprises in the example a low, a medium and a high steam turbine section. Each section is driven by a supply from the heat exchanger 2. Condensers 4 are presented in a fluid path of the Rankine (steam) cycle.

The gas turbine engine 1 is driving a generator 5, the steam turbine engine 3 a further generator 5. Alternatively mechanical components could be driven.

Pumps or fans may be positioned in the cylces when needed. One compressor or fan 7 is depicted in the Rankine cycle past past another heat exchanger 6.

Ambient air is provided to the gas turbine engine 1 via the position "a" in FIG. 1. Exhaust of the gas turbine engine 1 is provided through the heat exchanger 2 - which identifies the connection between the gas turbine and the steam turbine cycles - and eventually will be passed into the ambient via position "c" of FIG.1.

An exhaust fluid recirculation line 10 is present in the gas turbine cycle to allow recirculation of a fraction of the exhaust fluid 15 back to the inlet 11 of the gas turbine engine 1.

The exhaust fluid recirculation line 10 will preferably controlled by a valve (not shown) and may be provided with a fraction of the exhaust fluid 15 extracted downstream of the heat exchanger 2 (as shown in FIG. 1), extracted at a tap 21 of the heat exchanger 2 (only indicated by a dotted line in FIG. 1), or extracted directly past the exhaust 13 of the gas turbine engine 1 (not shown in FIG. 1).

A control unit 20 is simply indicated by a dotted rectangle. A single or several control units may be present. The control unit 20 may control all shown components or only a subset.

During operation at full load, the exhaust fluid recirculation line 10 may be closed.

When non-transient part load operation is performed, the exhaust fluid recirculation line 10 may be opened by the control unit 20, such that a fraction of the exhaust fluid 15 - e.g. 40% - is delivered to the inlet 11 of the gas turbine engine 1. At the inlet 11, the recirculated fraction of the exhaust fluid 15 is then mixed with ambient air and provided to the compressor 16 of the gas turbine engine 1.

For a combined cycle the power cycle does not end at the gas turbine exhaust. A stack temperature will go down if turbine inlet temperature is increased. This indicates that from a cycle perspective the turbine inlet temperature should be as high as possible to give a great temperature ratio of the complete cycle and thereby maximizing the theoretical efficiency in analogy with the Carnot cycle efficiency. A high turbine inlet temperature during part load is supported by the above mentioned recirculation of a fraction of the exhaust fluid 15.

The part load performance of a combined cycle power plant 100 is improved by introducing exhaust gas recirculation. Emissions considerations by maximising efficiency can be accomplished as the gas turbine mass-flow can be reduced to maintain a high combustion temperature without punishing component efficiencies too much.

Generally, compressors of gas turbines are volume flow machines and hence, a reduced inlet gas density would reduce the mass-flow of a fixed-speed machine with a maintained volume flow. This means that if the inlet temperature is increased, the mass-flow can be reduced without compromising the compressor efficiency by turning the variable guide vanes. The compressor work will increase due to the fact that the amount of work required raising the pressure of a fluid increases, however, the overall effect is that the cycle efficiency increases. Recirculating exhaust fluid with increased temperatures take benefit from this effect.

The purpose of recirculating exhaust fluid at part load is to reduce the gas turbine mass-flow by raising the inlet temperature. A higher gas temperature gives a lower gas density and thereby a reduced mass-flow. This means that the mass-flow can be reduced while the volume flow is maintained, which gives good compressor efficiency for a fixed speed gas turbine engine.

Two options for recirculation points are available: at the gas turbine exhaust (not shown) or the exit of the heat exchanger 2. The gas turbine exhaust 15 is much warmer and only a small fraction would be required to raise the compressor inlet temperature which will mean that the 02 level will be less of an issue for the combustor 12. Another advantage is that the gas pressure is higher and possibly no fan is required to deliver the exhaust fluid through the exhaust fluid recirculation line (10). However, a drawback would be that less energy will be available to the steam cycle and relatively small hot flow must be well mixed at the compressor inlet and the piping must withstand the high temperature. Recirculating the flow from after the heat exchanger 2 as depicted in FIG. 1 will ensure that only waste heat is utilized and the large, relatively low temperature flow will reduce problems with mixing at the inlet 11 of the compressor 16. The flow could be driven by a fan or a damper downstream the extraction (not shown in the figure).

When going down in loads (and with a closed exhaust fluid recirculation line 10), below the point where variable guide vanes of the compressor are fully closed, the mass flow cannot be reduced and hence the firing temperature will reduce rapidly. This will quite fast result in poor combustion efficiencies and emissions. By using exhaust fluid recirculation, as a compliment or alternative to variable guide vanes to reduce mass flow, the mass flow can be reduced further down the load range. This means that the firing temperature and turbine inlet temperature can remain higher at lower loads.

According to the invention, the first measure to reduce mass-flow would be to use exhaust fluid recirculation. The second measure, if needed, would be to alter variable guide vane settings in the compressor 16 of the gas turbine engine 1. The variable guide vanes may be used to fine tune the flow to give a more accurate control.

Recirculating exhaust fluid increases the H₂O and CO₂ content at the inlet 11 of the compressor 16 but reduces the O₂ content of the working fluid.

When recirculation of exhaust fluid is active a higher inlet temperature is experienced at the compressor 16 but higher compressor efficiency, i.e. less entropy generated through compression. The higher compressor efficiency is a result of that the volume metric flow is more similar to the design condition thanks to the reduced inlet gas density.

It may be worthwile noting that compressing a warmer gas is more energy consuming.

According to the invention a key purpose of exhaust fluid recirculation is to increase the compressor inlet temperature. When the load reduces, the exhaust mass flow reduces while the exhaust temperature remains high, this results in that the flue gas to steam/water flow ratio reduces with load and the efficiency of the heat exchanger 2 will increase i.e. the stack temperature is reduced.

Focusing on the overall combined cycle efficiency, because of the increased compressor work, a larger part of the gas turbine power is consumed by the compressor rendering in a shift of total power produced down to the steam cycle. With the control strategy to reduce the mass-flow and maintain temperatures, the gas turbine pressure ratio will reduce with the load, which will significantly reduce the gas turbine efficiency.

The steam cycle will experience a high exhaust temperature from the gas turbine but less mass-flow, which means that the feed-water to exhaust gas mass-flow ratio will increase resulting in an improved heat recovery. Thanks to the maintained high heat exchanger 2 inlet temperature, the reduced energy content mainly affects the low pressure circuit which will diminish with the load range. The overall effect on the steam cycle is that the efficiency remains fairly constant.

While exhaust fluid recirculation shifts the power distribution between the cycles it has more positive effect on low loads when the gas turbine efficiency is much lower than the steam cycle efficiency.

To conclude, by recirculating the warm exhaust gases from after the heat exchanger to the compressor inlet the inlet gas density is reduced with a reduced mass-flow as a result. Exhaust fluid reciculation can complement the variable guide vane mechanism as a measurement to reduce the mass-flow at part load and can improve both the efficiency and load range.

## Claims

1. Combined cycle power plant (100),
comprising
- a gas turbine engine (1);
- a steam turbine engine (3);
- a heat exchanger (2) via which an exhaust fluid from the gas turbine engine (1) can heat up a steam cycle fluid;
- an exhaust fluid recirculation line (10) which is able to guide a fraction of the exhaust fluid to an inlet (11) of the gas turbine engine (1);
- a control unit (20) which is adapted to monitor and/or configure an operating point, particularly a load, of the gas turbine engine (1) or of the combined cycle power plant (100) and to open the exhaust fluid recirculation line (10) to guide a fraction of the exhaust fluid to the inlet (11) of the gas turbine engine (1) in response to that the operating point indicates a part load operation of the gas turbine engine (1).

2. Combined cycle power plant (100) according to claim 1,
**characterised in that**
the exhaust fluid recirculation line (10) is connected at an upstream end of the exhaust fluid recirculation line (10) to an exhaust (13) of the gas turbine engine (1) downstream of the heat exchanger (2) or upstream of the heat exchanger (2), or is connected to a tap (21) at the heat exchanger (2) to extract the exhaust fluid from an intermediate position of the heat exchanger (2).

3. Combined cycle power plant (100) according to one of the claims 1 or 2,
**characterised in that**
the control unit (20) is adapted to guide through the exhaust fluid recirculation line (10) between 0 and 80% of the exhaust fluid (15), preferably between 0% and 60%, even more preferably between 0% to 40%.

4. Combined cycle power plant (100) according to any one of the preceding claims,
**characterised in that**
the control unit (20) is adapted to completely close the exhaust fluid recirculation line (10) in response to that the operating point indicates a full load operation of the gas turbine engine (1).

5. Combined cycle power plant (100) according to any one of the preceding claims,
**characterised in that**
the control unit (20) is adapted to reduce fuel supply (14) to the gas turbine engine for an operating point indicating part load operation of the gas turbine engine (1).

6. Combined cycle power plant (100) according to any one of the preceding claims,
**characterised in that**
the gas turbine engine (1) comprises a gas turbine compressor (16) including variable guide vanes and
the control unit (20) is adapted to change an angle setting of the variable guide vanes to reduce mass flow through the gas turbine engine (1) in response to that the operating point indicates the part load operation of the gas turbine engine (1).

7. Combined cycle power plant (100) according to any one of the preceding claims,
**characterised in that**
the control unit (20) is adapted to monitor a turbine inlet temperature of a turbine stage (17) of the gas turbine engine (1) and/or an exhaust temperature of the gas turbine engine (1) and adapted to control an amount of fluid through the exhaust fluid recirculation line (10) to keep the turbine inlet temperature and/or the exhaust temperature of the gas turbine engine (1) constant during part load operation of the gas turbine engine (1).

8. Combined cycle power plant (100) according to any one of the preceding claims,
**characterised in that**
the gas turbine engine (1) is operated by the control unit (20) with fixed revolving speed in both full and part load operation.

9. Combined cycle power plant (100) according to any one of the preceding claims,
**characterised in that**
the exhaust fluid recirculation line (10) can inject delivered recirculated exhaust fluid into the inlet (11) of the gas turbine engine (1).

10. Combined cycle power plant (100) according to any one of the claims 1 to 8,
further comprising
a further heat exchanger is provided at a downstream end of the exhaust fluid recirculation line (10) and at the inlet (11) of the gas turbine engine (1), wherein the further heat exchanger is configured to heat up inlet fluid to be provided to the gas turbine engine (1) via heat exchange from delivered recirculated exhaust fluid.

11. Method of operating a combined cycle power plant (100), the combined cycle power plant (100) comprising a gas turbine engine (1), a steam turbine engine (3), a heat exchanger (2) via which an exhaust fluid from the gas turbine engine (1) can heat up a steam cycle fluid, and an exhaust fluid recirculation line (10) which is able to guide a fraction of the exhaust fluid to an inlet (11) of the gas turbine engine (1),
the method comprising the steps of:
- monitoring and/or configuring an operating point, particularly a load, of the gas turbine engine (1) or of the combined cycle power plant (100) and
- opening the exhaust fluid recirculation line (10) to guide a fraction of the exhaust fluid to the inlet (11) of the gas turbine engine (1) in response to that the operating point indicates a part load operation of the gas turbine engine (1).
